Europäisches Patentamt

(19) European Patent Office

Office européen des brevets

(11) Numéro de publication: **0 101 333 B1**

(12) **FASCICULE DE BREVET EUROPEEN**

(45) Date de publication du fascicule du brevet: **19.11.87**

(51) Int. Cl.⁴: **G 05 D 1/08,** B 64 G 1/24

(21) Numéro de dépôt: **83401234.6**

(22) Date de dépôt: **16.06.83**

(54) **Procédé et dispositif de commande d'attitude pour satellite géosynchrone.**

(30) Priorité: **06.07.82 FR 8211847**

(43) Date de publication de la demande:
**22.02.84 Bulletin 84/08**

(45) Mention de la délivrance du brevet:
**19.11.87 Bulletin 87/47**

(84) Etats contractants désignés:
**DE GB IT NL SE**

(56) Documents cités:
**DE-A-2 537 577**
**DE-A-2 604 005**

(73) Titulaire: **MATRA**
**4 rue de Presbourg**
**F-75116 Paris (FR)**

(72) Inventeur: **Oskian, Roland**
**11, rue des Missionnaires**
**F-78000 Versailles (FR)**

(74) Mandataire: **Fort, Jacques et al**
**CABINET PLASSERAUD 84, rue d'Amsterdam**
**F-75009 Paris (FR)**

Courier Press, Leamington Spa, England.

EP 0 101 333 B1

## Description

La présente invention concerne la commande d'attitude des satellites géosynchrones prévus pour être placés sur une orbite située dans un plan proche de celui de l'Equateur et à une altitude telle qu'ils restent à poste à la verticale du même lieu. Elle trouve une application particulièrement important dans le cas des satellites stabilisés suivant trois axes, ayant un moment cinétique fourni soit par la rotation d'une fraction du corps du satellite, soit par des volants d'inertie.

Les satellites de ce type destinés aux télécommunications comportent en règle générale deux ailes munies de panneaux solaires destinés à fournir l'énergie électrique nécessaire au fonctionnement de la charge utile du satellite. On a déjà proposé un procéde commande de l'attitude de tels satellites, munis de panneaux solaires placés de part et d'autre du corps du satellite et orientables indépendamment autour d'un axe nord-sud, conforme au préembule de la revendication 1 (DE—A—2537577). D'une part on dépointe en sens opposé les deux ailes par rapport à leur position nominale (face au soleil) de façon à créer un effet de moulin à vent; d'autre part, on donne aux deux ailes un écart de dépointage qui se traduit par un déséquilibre entre les forces de pression solaire exercées sur les ailes pour créer un couple de basculement perpendiculaire à celui qui est produit dans le premier cas. Mais le calcul montre que cette disposition est peu satisfaisante, du fait du couplage important qui existe entre les deux effets et de la difficulté corrélative de réaliser un asservissement en position indépendant autour de deux axes par un système fonctionnant en boucle fermée, utilisant les données fournies par les senseurs portés par le satellite et/ou des données provenant du sol.

La présente invention vise à fournir un procédé et un dispositif de commande d'attitude de satellite utilisant l'orientation des ailes portant les panneaux solaires et répondant mieux que ceux antérieurement connus aux exigences de la pratique, notamment en ce qu'il permet de découpler, du moins au premier ordre, les commandes d'orientation autour de deux axes orthogonaux.

Dans ce but, l'invention propose notamment un procédé de commande d'attitude pour satellites du genre ci-dessus défini, conforme à la partie caractérisante de la revendication 1. Ce procédé part de la constatation, qui n'apparaît pas dans l'art antérieur, qu'il est possible, sur tout satellite qui comporte deux panneaux alignés, symétriques par rapport au corps et orientables indépendamment, de découpler les actions autour de deux axes orthogonaux (c'est-à-dire de piloter simultanément le satellite autour de deux axes en déterminant indépendamment les écarts de dépointage et les écarts de même sens requis), à condition de munir chaque aile d'au moins une ailette qui fait, avec elle, un angle fixe none nul. Il devient alors possible d'effectuer un pilotage indépendant autour de deux axes sans qu'il soit nécessaire d'ajouter un organe mobile supplémentaire aux panneaux solaires. Cette absence du tout élément supplémentaire mobile a une grande importance sur un satellite, où l'on cherche à limiter le plus possible le nombre des actuateurs et de leurs circuits de commande.

Dans un premier mode de réalisation, qui permet, par de faibles rotations, de créer un couple important autour d'un axe situé dans le plan roulis-lacet du satellite et perpendiculaire à la direction du Soleil, on munit chaque aile d'une ailette faisant un angle proche de 90° avec l'aile correspondante, les deux ailettes etant symétriques l'une de l'autre par rapport au centre du satellite. Ces deux ailettes sont avantageusement dirigées vers l'arrière, de façon à ne pas projeter une ombre portée sur les panneaux solaires. Lorsque les ailes occupent leur position nominale, les ailettes ne sont soumises qu'à une très faible force de pression solaire, du fait de leur grande obliquité. On voit que cette force augmente très vite lorsqu'on dépointe les ailes, puisqu'elle augmente comme le sinus de l'angle par rapport à la direction du Soleil. L'obliquité des ailettes sera choisie en fonction de l'angle maximum de dépointage par rapport à la position nominale des ailes qu'on envisage, de façon que les ailettes ne soient pas masquées par les ailes lors des manoeuvres. Dans la pratique, l'angle entre l'ailette et la perpendiculaire à l'aile correspondate ne dépassera guère 5°.

Dans un autre mode de réalisation, destiné à permettre le pilotage en tangage, chaque aile porte deux ailettes symétriques disposées symétriquement par rapport au plan médian de l'aile. L'angle entre chaque ailette et l'aile correspondante sera généralement compris entre 40° et 50°.

L'invention vise également à fournir un dispositif permettant de mettre en oeuvre le procédé ci-dessus défini conforme à la revendication 2.

L'invention sera mieux comprise à la lecture de la description que suit de modes particuliers de réalisation donnés à titre d'exemples non limitatifs. La description se réfère aux dessins qui l'accompagnent, dans lesquels:

— la figure 1 est un schéma de principe montrant la disposition d'un satellite géosynchrone sur sa trajectoire et les paramètres qui interviennent dans la mise en oeuvre de l'invention;
— la figure 2 montre l'effet d'un dépointage simultané et de même sens des deux ailes, dans un premier mode de réalisation de l'invention;
— la figure 3 montre comment, par dépointages égaux et de sens inverse de deux ailes à partir de la position moyenne de la figure 2, un effet de moulin à vent peut être superposé pour réaliser un couple quelconque dans le plan roulis-lacet;
— la figure 4 est un diagramme montrant les couples qui apparaissent pour diverses valeurs de l'écart de pointage entre les ailes et pour le dépointage moyen, pour un dimensionnement particulier des ailes et des ailettes du mode de réalisation des figures 1 à 3;
— la figure 5, similaire à la figure 2, montre un autre mode de réalisation de l'invention;
— la figure 6, similaire à la figure 2, montre l'effet d'un dépointage égal et de même sens des deux ailes du mode de réalisation de la figure 5;
— la figure 7, similaire à la figure 4, est un diagramme donnant la valeur des couples en tangage obtenus pour différentes valeurs du dépointage dans le cas d'un dimensionnement particulier du mode de réalisation de la figure 5.

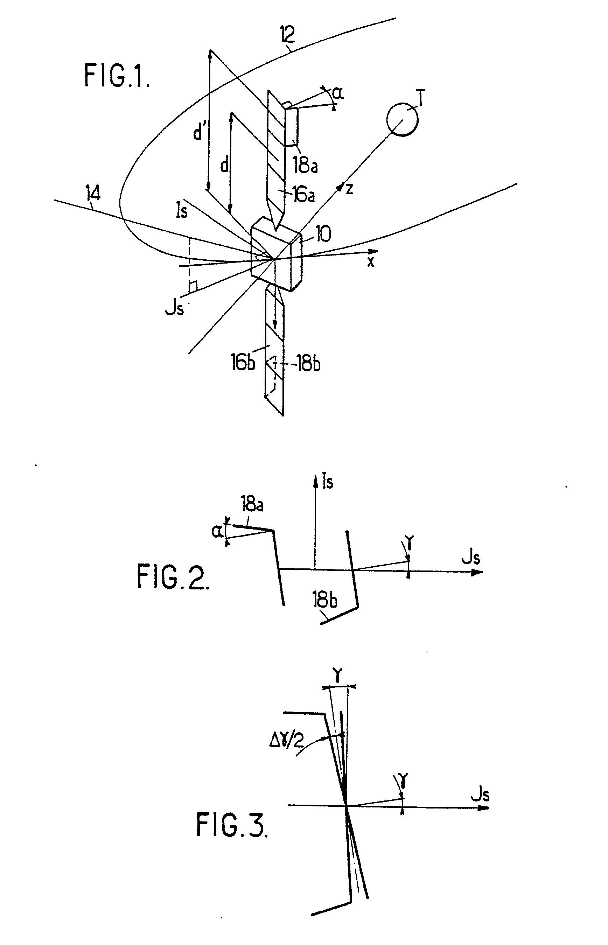

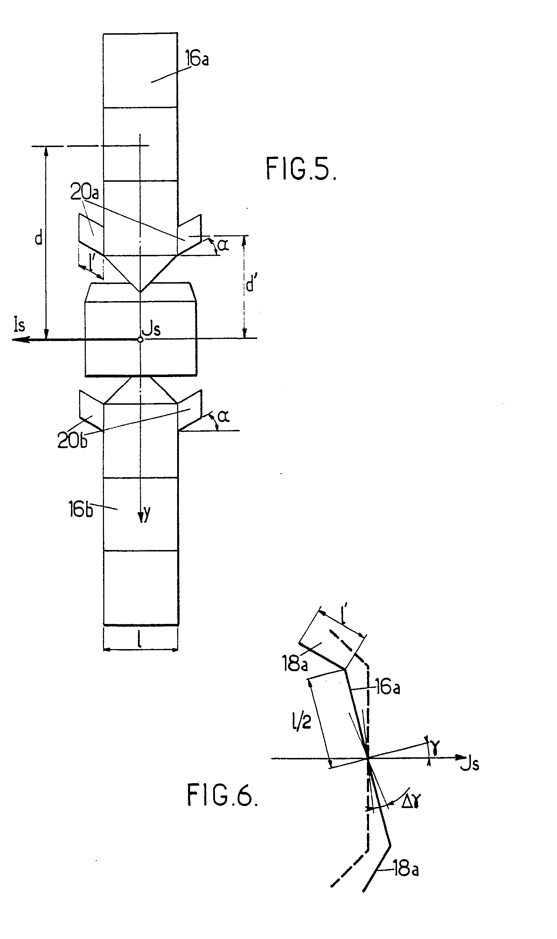

Le satellite 10 montré sur la figure 1 circule sur une orbite 12 qu'on supposera être équatoriale et géostationnaire. Les axes $x$, $y$ et $z$ liés au satellite constituent respectivement axe de roulis tangent à la trajectoire 12, axe de tangage orthogonal au plan de la trajectoire et axe de lacet dirigé vers la Terre. Sur la figure 1, Js désigne la projection de la direction 14 du Soleil sur le plan des axes $x$ et $z$ tandis que Is indique l'axe perpendiculaire à Js dans le plan xz.

Le satellite représenté en figure 1 porte deux ailes 16a et 16b portées par des axes qui, lorsque le satellite est à poste, sont orientées nord-sud. Des moteurs non représentés (moteurs couples commandés par impulsions en général) permettent de faire tourner les ailes 16a et 16b indépendamment l'une de l'autre autour de leurs axes, sous l'action de commandes provenant d'un système intégré au satellite ou provenant du sol.

La stabilisation du satellite est assurée essentiellement par des moyens présentant un moment cinétique, tels que volant ou fraction du satellite en rotation. Dans le cas du satellite OTS par exemple, cette stabilisation est assurée par un volant d'inertie qui permet de commander l'attitude du satellite simultanément en roulis et en lacet. Dans des satellites plus récents, cette stabilisation est assurée par échange des moments cinétiques entre plusieurs roues ayant des axes d'orientation différente.

A l'altitude géosynchrone, la source principale de perturbation agissant sur le satellite est la pression solaire, qui est cependant très faible, de l'ordre de $4{,}6-10^{-6}$ N/m². Comme cela a déjà été indiqué plus haut, on a déjà proposé de compenser les déséquilibres d'action de la pression solaire sur les différents éléments du satellite par modification de l'orientation des ailes (Udo Renner: Attitude Control by Solar Sailing—A promising experiment with OTS 2, ESA Journal, 1979, Vol. 3). Mais les effets dûs un dépointage relatif de ailes et à un dépointage global ne sont pas découplés suffisamment pour permettre d'exercer un couple résultant réglable de façon simple en valeur et en orientation et, au surplus, sun dépontage global important est nécessaire pour obtenir un couple appréciable.

Le dispositif suivant l'invention écarte ces inconvénients.

Dans le mode de réalisation montré en figure 1, chaque aile 16a et 16b est munie d'une ailette 18a ou 18b, pouvant être fractionnée en plusieurs éléments, les deux ailettes étant symétriques par rapport au centre du satellite lorsque les ailes sont en position nominale. Ces ailettes seront placées à une distance aussi élevée que possible du centre de façon que le moment des forces de pression de radiation solaire qui s'exerce sur les ailettes soit maximum pour une valeur donnée de la force.

Ces ailettes sont fixées aux ailes dans une orientation invariable en service; l'angle $\alpha$ entre le plan de l'aile et la normale à l'aile sera faible, de quelques degrés, l'ailette étant tournée vers l'arrière de façon à être soumise au rayonnement solaire en incidence rasante lorsque l'aile est dans son orientation nominale.

Le calcul permet de déterminer l'effet de faibles dépointages des ailes par rapport à l'orientation nominale.

Effet d'un dépointage $\gamma$ simultané de même sens et de même amplitude des deux ailes (figure 2)

Lorsque les deux ailes ont un même dépointage $\gamma$ par rapport au soleil, la surface apparente de l'une des ailettes (18b sur la figure 2) augmente suivant une loi en sin $(\alpha+\gamma)$ tandis que celle de l'autre ailette 18a diminue. Un couple $C_{ls}$ dirigé suivant Is est alors appliqué au satellite et peut s'écrire, si on s'arrête au premier ordre en $\gamma$, et à condition qu'on ait $\gamma < \alpha$:

$$C_{ls} = 2pA'd'(1-v')\gamma \tag{1}$$

où les notations sont les suivantes:
$p$ = pression de radiation
$A'$ = surface d'une ailette
$v'$ = coefficient de réflexivité des ailettes
$d'$ = bras de levier d'une ailette.

La formule (1) reste valable si les ailes présentent l'une par rapport à l'autre un décalage angulaire $\Delta\gamma$, $\gamma$ désignant alors le dépointage moyen des deux ailes 16 et 16b (figure 3) et on constate qu'elle ne contient pas de terme en $\Delta\gamma$, donc que le couple $C_{ls}$ reste inchangé lors des variations de $\Delta\gamma$ lorsque $\gamma$ constant.

Il est très important de remarquer que $C_{ls}$ est une fonction linéaire de $\gamma$, donc prend des valeurs importantes pour des angles faibles, à condition de constituer les ailettes en matériau peu réflectif et de les placer à une distance $d'$ aussi élevée que possible du centre du satellite.

Effet d'un dépointage Δγ des ailes l'une par rapport à l'autre (figure 3)

L'effet de moulin à vent autour de l'axe Js par dépointage de deux ales démunies d'ailettes, l'une par rapport à l'autre, a déjà été utilisé. Cet effet est évidement conservé dans le cas d'ailes munies d'ailettes. Mais le calcul montre qu'au second ordre près, le couple C$_{Js}$ autour de Js ne fait pas intervenir γ:

$$C_{Js} = 2p \cdot 1 \, A \cdot d \cdot v \cdot \Delta\gamma \qquad (2)$$

Dans cette formule:
A est la surface d'une aile
d est le bras de levier d'une aile
Δγ est le dépointage entre les ailes.

En résumé, on voit que, lorsque γ et Δγ sont faibles, il y a découplage complet entre l'effet d'un dépointage relatif Δγ et celui d'un dépointage d'ensemble γ des deux ailes.

On peut en conséquence créer sur le satellite un couple orienté suivant n'importe quelle direction dans le plan (Is, Js), c'est-à-dire dans le plan roulis-lacet, et effectuer un pilotage en boucle fermée et/ou une compensation directe en boucle ouverte à partir des signaux fournis par les senseurs du satellite.

A titre d'exemple, on peut citer les valeurs numériques suivantes d'un dispositif destiné à un satellite géosynchrone.

| | | | |
|---|---|---|---|
| Ailes 16a et 16b: | A=7,86 m², | d=5m, | v=0,2 |
| Ailettes 18a et 18b: | a'=2m², | d'=7m, | v'=0,1,α=5°. |

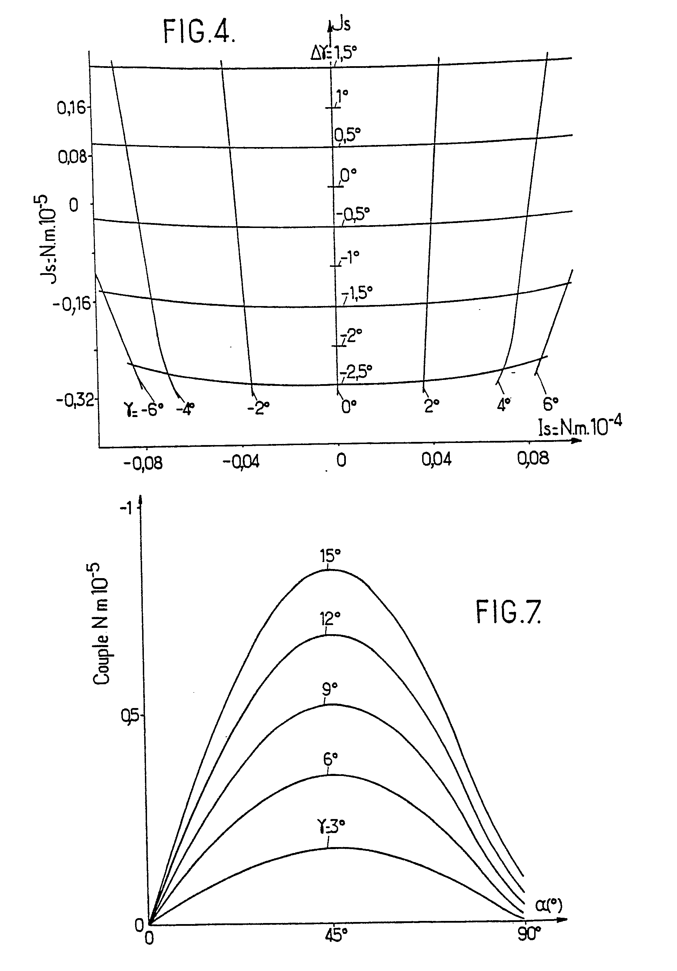

La variation des couples C$_{Is}$ et C$_{Js}$ en fonction des angles γ et Δγ est alors celle montrée en figure 4. Les angles de dépointage des ailes nécessaires au pilotage et à la compensation des couples perturbateurs sont de l'ordre de 6° au maximum, ce qui ne se traduit que par une perte maximum de rendement des ailes de 0,5%. On peut toutefois remarquer que le maintien des ailes en position nominale se traduirait par un effet de moulin à vent; mais il est de très faible intensité et peut être compensé par un dépointage relatif Δγ/2 des deux ailes par rapport à la position nominale dont l'effet sur le rendement est négligeable.

Contrairement au mode de réalisation précédent, destiné à permettre le pilotage dans le plan (x, z), c'est-à-dire roulis-lacet, celui montré en figures 5 et 6 est destiné au pilotage dans le plan (Js, Y). A chaque aile 16a ou 16b sont fixées symétriquement deux ailettes 20a ou 20b, obliquement par rapport à l'aile. Ces ailettes sont placées sur les côtés des ailes de façon à être à distance de l'axe de tangage et aussi près que possible du centre du satellite pour réduire les couples en roulis et lacet dûs aux ailettes. La présence des ailettes permet alors de créer, par faible rotation en bloc des deux ailes 16a et 16b, un couple important dans la direction de l'axe de tangage y, découplé de l'effet de moulin à vent obtenu par écart de dépointage des ailes.

De façon plus précise, le calcul montre qu'un même dépointage γ des deux ailes (figure 6) faite apparaître un couple Cy dirigé suivant l'axe de tangage:

$$Cy = p \cdot A' \cdot \sin 2\gamma \cdot \cos \gamma [I \sin \alpha + I'(1+v')\sin 2\alpha + Iv' \sin 3\alpha] \qquad (3)$$

Cette formule reste valable au second ordre près en cas de dépointage relatif Δγ entre les deux ailes, γ désignant alors le dépointage moyen. Les notations sont les suivantes:
A'=surface d'une ailette 20a ou 20b
v'=coefficient de réflexivité des ailettes
I et I'=largeurs des ailes et des ailettes (figure 6)
p=pression de radiation solaire
α=angle des ailettes par rapport aux ailes

On voit alors que l'on obtient une variation maximale du couple Cy en fonction du dépointage γ pour un angle α optimal qui ne dépend pas de γ. La valeur de cet angle α optimal se calcule facilement; il est de l'ordre de 42° pour I=1,26 m; I'=1,2 m; v'=0,6.

Comme dans le cas des figures 1—3, ce dépointage relatif Δγ se traduit par un couple suivant Js qui est donné, au premier ordre près, par:

$$C_{Js} = 2p[A \cdot d \cdot v - A' \cdot d' \cdot v' \cdot 2 \cos^3\alpha]\Delta\gamma \qquad (4)$$

Dans cette formule, les notations sont:
A, A'=surface d'une aile et d'une ailette
d, d'=bras de levier d'une aile et d'une ailette
v, v'=coefficient de réflexivité des ailes et des ailettes

A titre d'exemple, on peut indiquer qu'on a:

4

**0 101 333**

$$C_{Js} = \Delta\gamma \cdot 10^{-6} N \cdot m \ (\Delta\gamma \ \text{étant en degrés})$$

pour:

A=7,86 m²;        d=5 m;      v=0,2;      l=1,26 m
A'=1 m²;          d'=2,5 m;   v'=0,6;     l'=1,2 m
α=42°

La variation du couple en tangage en fonction de α pour ces valeurs des autres paramètres est donnée en figure 7, où on voit que l'on atteint des couples élevés même pour des valeurs de γ très modérées.

Le découplage, total au second ordre près, ainsi réalisé, permet de compenser directement les couples perturbateurs solaires dans les directions Js et y. Le dispositif peut être complété par des moyens permettant de créer un couple suivant la direction ls, constitués par exemple par une bobine magnétique de façon à rendre possible un pilotage suivant trois axes.

Le pilotage lui-même peut être commandé par des moyens classiques à partir des signaux fournis par les senseurs. La constitution même des circuits de pilotage, n'étant pas concernée par l'invention, ne sera pas décrite.

Comme cela a déjà été indiqué plus haut, la pression de radiation solaire agissant sur les ailettes est très faible. Les ailettes pourront donc être de masse très faible. Elles pourront par exemple être constituées par un cadre en cordes à piano sur lequel est tendue une voile en matériau très fin, ayant une masse de quelques g/m². On peut notamment utiliser du papier d'aluminium. Toutefois, il sera souhaitable de donner à la voile un état de surface tel qu'elle présente un coefficient de réflexivité aussi faible que possible pour la première configuration, aussi élevé que possible pour la deuxième.

Lors du lancement du satellite, les ailes sont généralement repliées en accordéon. Les ailettes pourront elles aussi être repliées et venir dans leur position de service, fixée par des butées, lors du déploiement des ailes. Le déploiement élastique peut aisément être réalisé du fait de l'élasticité de la corde à piano lorsque la constitution adoptée est celle mentionnée plus haut.

**Revendications**

1. Procédé de commande d'attitude pour satellite sur orbite géosynchrone, muni de deux ailes (16a, 16b) munies de panneaux solaires, placées symétriquement de part et d'autre du corps du satellite et orientables indépendamment autour d'un axe nord-sud, procédé selon lequel on fait apparaître un couple agissant sur le satellite autour de l'axe de lacet en donnant aux deux ailes des écarts de pointage symétriques par rapport à leur orientation nominale vers le Soleil, caractérisé en ce qu'on fixe à chaque aile au moins une ailette latérale (18a, 18b ou 20a, 20b) faisant avec l'aile un angle prédéterminé fixe compris entre 0 et 90° et en ce qu'on provoque l'apparition d'un couple autour d'un axe orthogonal à l'axe de lacet par rotation simultanée et dans le même sens des deux ailes d'une même amplitude à partir de leur orientation nominale, suffisamment faible pour que le couple crée autour de l'axe de lacet par ladite rotation simultanée soit du second ordre par rapport au couple crée autour dudit axe orthogonal.

2. Dispositif de commande d'attitude pour satellite géosynchrone muni de deux ailes placées symétriquement de part et d'autre du corps du satellite et équipées de moyens permettant de les orienter indépendamment de sorte qu'un couple dirigé autour de l'axe de lacet peut être appliqué au satellite en donnant aux deux ailes des écarts de pointage symétriques par rapport à l'orientation nominale vers le Soleil, caractérisé en ce qu'à chaque aile (16a, 16b) est fixée au moins un ailette latérale faisant avec l'aile un angle prédéterminé fixe, de sorte qu'on peut faire apparaître un couple autour d'une direction perpendiculaire à celle du premier couple par rotation simultanée des deux ailes (16a, 16b) dans le même sens et de la même amplitude, ladite amplitude étant suffisamment faible pour que le couple créé autour de l'axe de lacet par ladite rotation simultanée soit du second ordre par rapport au couple créé autour de la direction perpendiculaire.

3. Dispositif selon la revendication 2, caractérisé en ce que chaque aile est munie d'une ailette latérale faisant un angle fixe ne dépassant pas 5° avec la normale à l'aile correspondante, les deux ailettes (18a, 18b) étant symétriques l'une de l'autre par rapport à l'axe parallèle à la direction satellite-Soleil et passant par le centre du satellite et reliées aux parties terminales des ailes de façon à pouvoir créer un couple important autour d'un axe situé dans le plan roulis-lacet du satellite et perpendiculaire à la direction du Soleil.

4. Dispositif selon la revendication 2, caractérisé en ce que chaque aile est munie de deux ailettes latérales (20a, 20b) faisant un angle proche de 45° avec l'aile correspondante de façon à pouvoir créer un couple important autour de l'axe de tangage du satellite (y), chaque paire d'ailettes étant symétrique de l'autre par rapport au plan roulis-lacet passant par le centre du satellite, chaque ailette étant reliée près de la base des ailes de façon à réduire les couples en roulis et lacet dus aux ailettes.

**Patentansprüche**

1. Verfahren zur Lagesteuerung eines geosynchronen Satelliten auf einer Umlaufbahn, der mit zwei mit

5

**0 101 333**

Solarzellen bestückten Tragflächen (16a, 16b) versehen ist, die symmetrische beiderseits des Satellitenkörpers angeordnet und unabhängig voneinander um die Nord- Südachse schwenkbar sind, wobei ein Drehmoment auf den Satelliten um die Gierachse herum derart ausgeübt wird, daß mit den zwei Tragflächen Abweichungen aus der symmetrischen Ausrichtung im Verhältnis gegenüber der nominellen Richtung zur Sonne bewirkt werden, dadurch gekennzeichnet, daß an jeder Tragfläche wenigstens ein seitlich stehender Flügel (18a, 18b oder 20a, 20b) angebracht wird, der mit der Tragfläche einen vorbestimmten festen Winkel zwischen 0 und 90° einschließt, und durch den bewirkt wird, daß ein Drehmoment um die Achse senkrecht zur Gierachse durch gleichzeitige Rotationsbewegung auftritt, um daß in demselben Sinne die zwei Tragflächen in ein und derselben Größenordnung aus ihrer nominellen Lage ausreichend gering ausgelenkt werden, damit das durch die Rotationsbewegung hervorgerufene Drehmoment um die Gierachse von zweiter Ordnung im Verhältnis zum erzeugten Drehmoment um die dazu senkrechte Achse ist.

2. Vorrichtung zur Lagesteuerung eines geosynchronen Satelliten, der mit zwei symmetrisch beiderseits des Satellitenkörpers angeordneten Tragflächen versehen und derart ausgerüstet ist, daß diese unabhängig von der Art auslenkbar sind, mit der ein Drehmoment um die Gierachse auf den Satelliten einwirkbar ist, derart, daß mit den zwei Tragflächen Abweichungen aus der symmetrischen Lage im Verhältnis zur nominellen Lage gegenüber der Sonne erzielbar sind, dadurch gekennzeichnet, daß an jeder Tragfläche (16, 16b) wenigstens ein seitlich stehender Flügel angebracht ist, der mit der Tragfläche einen vorbestimmten Winkel einschließt, derart, daß ein Drehmoment um eine Richtung senkrecht zu der des ersten Drehmomentes durch gleichzeitige Rotationsbewegung der zwei Tragflächen (16a, 16b) in demselben Sinne und von derselben Größe ausübbar ist, wobei diese Größe genügend gering ist, damit das durch die gleichzeitige Rotationsbewegung hervorgerufene Drehmoment um die Gierachse von zweiter Ordnung im Vergleich zum erzeugten Drehmoment um die Richtung rechtwinklig dazu ist.

3. Vorrichtung gemäß Anspruch 2, dadurch gekennzeichnet, daß jede Tragfläche mit einem seitlich stehenden Flügel in einem fixierten Winkel nicht größer als 5° gegenüber der Normalen der entsprechenden Tragfläche ersehen ist, wobei die zwei Flügel (18a, 18b) symmetrisch zueinander im Verhältnis zur zur Richtung Satellit-Sonne parallelen Achse durch das Zentrum des Satelliten angeordnet sind, und wobei die Flügel an den Enden der Tragflächen derart angebracht sind, daß ein beachtliches Drehmoment um die in der Roll- Gierebene des Satelliten und rechtwinklig zur Richtung zur Sonne gelegene Achse erzeugbar ist.

4. Vorrichtung gemäß Anspruch 2, dadurch gekennzeichnet, daß jede Tragfläche mit zwei seitlich stehenden Flügeln (20a, 20b) in einem Winkel von etwa 45° mit der entsprechenden Tragfläche versehen ist, derart, daß ein beachtliches Drehmoment um die vertikale Achse des Satelliten (Y) ausübbar ist, wobei jedes Flügelpaar symmetrisch zum anderen im Verhältnis zur Radial- Tangentialebene durch das Zentrum des Satelliten angeordnet ist, und wobei jeder Flügel nahe am Fuß der Tragfläche angebracht ist, derart, daß die Drehmomente in der Roll- und Gierebene durch die Flügel reduzierbar sind.

**Claims**

1. Method for controlling the attitude of a satellite in a geosynchronous orbit, the satellite having two wings (16a, 16b) provided with solar panels, symmetrically located on both sides of the body of the satellite and independently rotatable about a North-South axis, wherein a torque acting on the satellite about the yaw axis is generated by orienting the two wings with symmetrical mis-alignments with respect to their set direction aligned with the Sun, characterized in that at least one lateral winglet (18a, 18b or 20a, 20b) is secured to each wing at a predetermined fixed angle with the wing of from 0 to 90° and in that a torque is generated about an axis orthogonal to the yaw axis by rotating the two wings simultaneously and in the same direction by a same amount from their set angular position, which is low enough for the torque generated about the yaw axis by said simultaneous rotation to be of a second order of magnitude as compared to the torque generated about said orthogonal axis.

2. Device for controlling the attitude of a geosynchronous satellite having two wings which are located symmetrically on both sides of the body of the satellite and which are provided with means for rotating them independently so that a torque directed about the yaw axis may be applied to the satellite by giving to the two wings mis-alignments which are symmetrical with respect to the set direction aligned with the Sun, characterized in that at least one lateral winglet is secured to each wing (16a, 16b) at a predetermined fixed angle with the wing, whereby a torque may be generated about a direction perpendicular to that of the first torque by simultaneously rotating both wings (16a, 16b) in the same direction and by the same amount, said amount being low enough for the torque generated about the yaw axis by said simultaneous rotation to be of the second order of magnitude as compared to the torque generated about said perpendicular direction.

3. Device according to claim 2, characterized in that each wing is provided with a lateral winglet at a fixed angle which does not exceed five degrees with a line perpendicular to the respective wing, the two winglets (18a, 18b) being mutually symmetrical with respect to an axis which is parallel to the direction from the satellite to the Sun and which passes through the center of the satellite and being secured to be distal portions of the wings so that they can generate a significant torque about an axis which is located in the pitch-roll plane of the satellite and perpendicular to the Sun direction.

4. Device according to claim 2, characterized in that each wing is provided with two lateral winglets (20*a*, 20*b*) at an angle of about 45° with the respective wing whereby they can generate a significant torque about the pitch axis (y) of the satellite, each pair of winglets being symmetrical with respect to the other with respect to the roll-yaw plane passing through the center of the satellite and each winglet being secured near the basis of the wings for decreasing the roll and yaw torques due to the winglets.

FIG.1.

FIG.2.

FIG.3.

FIG.5.

FIG.6.

FIG.4.

FIG.7.